# EUROPÄISCHE PATENTANMELDUNG

(11) **EP 4 668 042 A1**
(43) Veröffentlichungstag der Anmeldung: **24.12.2025**
(21) Anmeldenummer: 24182616.3
(22) Anmeldetag: 17.06.2024
(51) Int. Cl.: G05B 23/02

(54) **BETRACHTUNG DES BELASTUNGSGRADES EINES LEISTUNGSUMRICHTERS ÜBER ZEITRÄUME**

(71) Anmelder: Siemens Aktiengesellschaft, 80333 München (DE)
(72) Erfinder: Betz, Stefan, 90449 Nürnberg (DE); Geyer, Horst, 91058 Erlangen (DE); Kögl, Stefan, 90403 Nürnberg (DE); Tsotoulidis, Savvas, 90491 Nürnberg (DE)
(74) Vertreter: Siemens Patent Attorneys

(57) **Zusammenfassung**

Eine Recheneinrichtung (6) nimmt von einer Steuereinrichtung (4) eines Leistungsumrichters (3) über ein offenes Netzwerk (7) immer wieder jeweilige aktuelle Daten (D) entgegen, die einen jeweiligen Betriebszustand des Leistungsumrichters (3) und einen Bezugszeitpunkt (t) für den jeweiligen Betriebszustand beschreiben. Sie speichert die jeweils entgegengenommenen Daten (D) zusätzlich zu bereits gespeicherten Daten (D), die jeweils einen jeweiligen Betriebszustand des Leistungsumrichters (3) und den jeweiligen Bezugszeitpunkt (t) für den jeweiligen Betriebszustand beschreiben, so dass sie nach und nach eine Historie des Betriebszustands des Leistungsumrichters (3) aufbaut. Die Recheneinrichtung (6) nimmt von einer Bedienperson (10) einen Anfangszeitpunkt (t1) und einen Endzeitpunkt (t2) entgegen, wobei der Anfangszeitpunkt (t1) in der Vergangenheit liegt und der Endzeitpunkt (t2) nach dem Anfangszeitpunkt (t1) liegt. Sie selektiert die gespeicherten Daten (D), deren jeweiliger Bezugszeitpunkt (t) zwischen dem Anfangszeitpunkt (t1) und dem Endzeitpunkt (t2) liegt. Die Recheneinrichtung (6) ermittelt für die Bezugszeitpunkte (t) der selektierten Daten (D) anhand der Betriebszustände des Leistungsumrichters (3) der selektierten Daten (D) einen jeweiligen Belastungsgrad (δV) des Leistungsumrichters (3) und gibt einen zeitlichen Verlauf des Belastungsgrades (δV) und/oder einer aus dem Belastungsgrad (δV) abgeleiteten Größe, insbesondere des Integrals des Belastungsgrades (δV), und/oder eine Häufigkeit des Belastungsgrades (δV) als Funktion des Belastungsgrades (δV) als Grafik (C) an die Bedienperson (10) aus.

## Beschreibung

Die vorliegende Erfindung geht aus von einem Betriebsverfahren für eine Recheneinrichtung, - wobei die Recheneinrichtung von einer Steuereinrichtung eines Leistungsumrichters über ein offenes Netzwerk immer wieder jeweilige aktuelle Daten entgegennimmt, die einen jeweiligen Betriebszustand des Leistungsumrichters und einen Bezugszeitpunkt für den jeweiligen Betriebszustand beschreiben.

Ein offenes Netzwerk ist ein Netzwerk, an das aus Sicht des Netzwerks beliebige Komponenten angeschlossen werden können, so dass die Komponenten über das Netzwerk Informationen austauschen können. Beispiele für ein derartiges Netzwerk sind das Internet oder ein LAN (local area network).

Die vorliegende Erfindung geht weiterhin aus von einem Computerprogramm, wobei das Computerprogramm Befehle umfasst, die bei ihrer Ausführung durch eine Recheneinrichtung die Recheneinrichtung veranlassen, ein derartiges Betriebsverfahren auszuführen.

Die vorliegende Erfindung geht weiterhin aus von einer Recheneinrichtung, wobei die Recheneinrichtung mit einem derartigen Computerprogramm programmiert ist, so dass die Recheneinrichtung im Betrieb ein derartiges Betriebsverfahren ausführt.

Die genannten Gegenstände sind bekannt.

Ungeplante Ausfälle von Leistungsumrichtern sind ein erheblicher Störfaktor in Fabriken und Anlagen. Die verbleibende Lebensdauer von Komponenten des Leistungsumrichters ist daher von erheblicher Bedeutung, um rechtzeitig einen Austausch vornehmen zu können. Die Bestimmung der verbleibenden Lebensdauer ist jedoch schwierig und mit erheblichen Unsicherheiten verbunden. Insbesondere handelt es sich um ein Problem, in das viele verschiedene Größen eingehen.

Im Stand der Technik stellt der Hersteller des Leistungsumrichters üblicherweise Überlegungen für die sogenannte MTBF (= mean time between failure) an und nimmt entsprechende Berechnungen vor. Die Berechnungen basieren üblicherweise auf einem typischen Betriebszyklus unter angenommenen typischen Betriebsbedingungen wie beispielsweise Belastung des Umrichters, Umgebungstemperatur, Luftfeuchtigkeit, Luftdruck usw. Dadurch wird die MTBF abgeschätzt. Das Ergebnis der Überlegungen und Berechnungen wird von dem Hersteller in der Produktdokumentation angegeben und dadurch dem Betreiber der Fabrik oder Anlage bekannt.

Der tatsächliche Betrieb des Leistungsumrichters entspricht üblicherweise nicht oder zumindest nicht exakt den Annahmen, die der Bestimmung der MTBF durch den Hersteller des Leistungsumrichters zugrunde gelegen haben. Die tatsächliche Lebensdauer des Leistungsumrichters kann daher größer oder kleiner als die in der Produktdokumentation angegebene Lebensdauer sein.

In der Praxis steht der Betreiber der Fabrik oder Anlage daher vor dem Dilemma, entweder den Leistungsumrichter verfrüht auszutauschen oder das Risiko eines plötzlichen Ausfalls in Kauf nehmen zu müssen. Erfolgt ein verfrühter Austausch, ist dies mit eigentlich unnötigen Kosten verbunden. Fällt der Leistungsumrichter plötzlich aus, ist oftmals mit noch viel größeren Schäden zu rechnen. Es gibt daher Bestrebungen, die tatsächlich noch zu erwartende Lebensdauer eines Leistungsumrichters genauer vorherzusagen.

Im Stand der Technik sind für die Bestimmung der Rest-Lebensdauer verschiedene Vorgehensweisen bekannt.

So ist es beispielsweise bekannt, Überwachungssysteme vorzusehen, die mittels Sensoren den jeweiligen tatsächlichen Betriebszustand des Leistungsumrichters erfassen und auswerten. Die zugehörige Auswertung kann nach Bedarf innerhalb oder außerhalb der Steuereinrichtung für den Leistungsumrichter erfolgen.

Weiterhin sind datenbasierte Ansätze bekannt, mittels derer aus bestehenden Messungen und Zustandsvariablen Muster abgeleitet werden. Eine Abweichung von einem spezifischen Muster kann eine Anomalie des Leistungsumrichters andeuten.

Schließlich existieren Modelle, mittels derer online der Verbrauch an Lebensdauer des Leistungsumrichters geschätzt wird. Diese Modelle basieren in der Regel auf den Leistungszyklen des Leistungsumrichters, wie sie aus den Datenblättern bekannt sind, und der geschätzten Sperrschichttemperatur des Leistungsumrichters. Die Änderung der Sperrschichttemperatur während eines Leistungszyklus trägt in erheblichem Umfang zum Verschleiß eines Leistungsumrichters bei, beispielsweise eines IGBTs des Leistungsumrichters. Derartige Modelle berücksichtigten praktischerweise die tatsächlichen Lastsituationen. Die Genauigkeit, mittels derer der Verbrauch an Lebensdauer und damit die verbleibende Rest-Lebensdauer ermittelt wird, hängt jedoch in erheblichem Umfang von dem thermischen Modell der leistungselektronischen Komponente und der Identifikation der Lastzyklen ab. Sowohl der genaue Alterungsmechanismus als auch die Anzahl und die Art von Parametern sind oftmals nur schwer erfassbar bzw. modellierbar. Entsprechend ungenau ist die Vorhersage.

Die Aufgabe der vorliegenden Erfindung besteht darin, Möglichkeiten zu schaffen, mittels derer dem Betreiber ein Mittel an die Hand gegeben wird, den Betrieb seiner Fabrik oder Anlage gezielt derart zu modifizieren, dass die Lebensdauer des Leistungsumrichters optimiert wird.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 und 3.

Erfindungsgemäß wird ein Betriebsverfahren der eingangs genannten Art dadurch ausgestaltet,
- dass die Recheneinrichtung die jeweils entgegengenommenen Daten zusätzlich zu bereits gespeicherten Daten speichert, die jeweils einen jeweiligen Betriebszustand des Leistungsumrichters und den jeweiligen Bezugszeitpunkt für den jeweiligen Betriebszustand beschreiben, so dass die Recheneinrichtung nach und nach eine Historie des Betriebszustands des Leistungsumrichters aufbaut,
- dass die Recheneinrichtung von einer Bedienperson einen Anfangszeitpunkt und einen Endzeitpunkt entgegennimmt, wobei der Anfangszeitpunkt in der Vergangenheit liegt und der Endzeitpunkt nach dem Anfangszeitpunkt liegt,
- dass die Recheneinrichtung die gespeicherten Daten selektiert, deren jeweiliger Bezugszeitpunkt zwischen dem Anfangszeitpunkt und dem Endzeitpunkt liegt, und
- dass die Recheneinrichtung für die Bezugszeitpunkte der selektierten Daten anhand der Betriebszustände des Leistungsumrichters der selektierten Daten einen jeweiligen Belastungsgrad des Leistungsumrichters ermittelt und einen zeitlichen Verlauf des Belastungsgrades und/oder einer aus dem Belastungsgrad abgeleiteten Größe, insbesondere des Integrals des Belastungsgrades, und/oder eine Häufigkeit des Belastungsgrades als Funktion des Belastungsgrades als Grafik an die Bedienperson ausgibt.

Durch das Aufbauen der Historie ist es möglich, nachträglich Auswertungen der Betriebszustände bestimmter Zeitspannen zu ermitteln. Die Auswertungen, die auf der Vorgabe des Anfangszeitpunkts und des Endzeitpunkts aufbauen, können parallel zum weiteren Entgegennehmen der Daten erfolgen.

Der Anfangszeitpunkt und der Endzeitpunkt der Zeitspanne können der Recheneinrichtung von der Bedienperson vorgegeben werden. Je nach Ausgestaltung des Betriebsverfahrens können in manchen Fällen nur vorbestimmte feste Zeiträume vorgegeben werden. In anderen Fällen kann die Bedienperson beliebige Zeiträume vorgeben.

Der Anfangszeitpunkt muss in der Vergangenheit liegen und ebenso muss der Endzeitpunkt nach dem Anfangszeitpunkt liegen. Die Zeitspanne, also der zeitliche Abstand von Anfangszeitpunkt und Endzeitpunkt, kann aber variieren. Auch kann der Endzeitpunkt auf dem aktuellen Zeitpunkt liegen. Es ist sogar möglich, den Endzeitpunkt derart vorzugeben, dass der Endzeitpunkt von der Recheneinrichtung kontinuierlich oder von Zeit zu Zeit nachgeführt wird, wenn die Historie sich entsprechend vergrößert.

In vielen Fällen wird es sinnvoll sein, als Grafik an die Bedienperson einen zeitlichen Verlauf des Belastungsgrades auszugeben. In anderen Fällen kann es auch möglich sein, als Grafik eine aus dem Belastungsgrad abgeleitete Größe an die Bedienperson auszugeben. Als abgeleitete Größe kommt, insbesondere das Integral des Belastungsgrades in Frage. In anderen Fällen kann es sinnvoll sein, Häufigkeiten von bestimmten Belastungsgraden (Histogramme) zu ermitteln und an die Bedienperson auszugeben. In beiden Fällen, also sowohl bei der Ausgabe eines zeitlichen Verlaufs als auch bei der Ausgabe eines Histogramms, kann der Betreiber der Fabrik oder Anlage - zumindest in manchen Fällen - den Betrieb seiner Fabrik oder Anlage anpassen, so dass der Verschleiß des Leistungsumrichters reduziert wird.

Der Belastungsgrad kann nach Bedarf bestimmt sein. Beispielsweise kann es sich um die Sperrschichttemperatur oder um den Prozentsatz des Schaltzyklus handeln, während dessen Halbleiterschalter des Umrichters durchgeschaltet sind. Vorzugsweise steigt jedoch der Belastungsgrad mit dem Ausmaß, in dem der Leistungsumrichter Verschleiß unterliegt, an. Insbesondere kann der Belastungsgrad proportional zu dem Verschleiß sein.

Vorzugsweise markiert die Recheneinrichtung Bereiche der ausgegebenen Grafik in Abhängigkeit von dem Belastungsgrad farblich. Dadurch ist für die Bedienperson eine besonders einfache Auswertung der an sie ausgegebenen Grafik möglich.

Die Aufgabe wird weiterhin durch ein Computerprogramm mit den Merkmalen des Anspruchs 4 gelöst. Erfindungsgemäß veranlassen die Befehle die Recheneinrichtung dazu, ein erfindungsgemäßes Betriebsverfahren auszuführen.

Die Aufgabe wird weiterhin durch eine Recheneinrichtung mit den Merkmalen des Anspruchs 5 gelöst. Erfindungsgemäß ist die Recheneinrichtung mit einem erfindungsgemäßen Computerprogramm programmiert, so dass die Recheneinrichtung im Betrieb ein erfindungsgemäßes Betriebsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Blockschaltbild,
- FIG 2 bis 4: ein Ablaufdiagramm,
- FIG 5: ein Ablaufdiagramm,
- FIG 6: eine Grafik,
- FIG 7: ein Ablaufdiagramm,
- FIG 8: eine Grafik,
- FIG 9: ein Ablaufdiagramm,
- FIG 10: eine Grafik,
- FIG 11 und 12: Modifikationen der FIG 6 und 10.

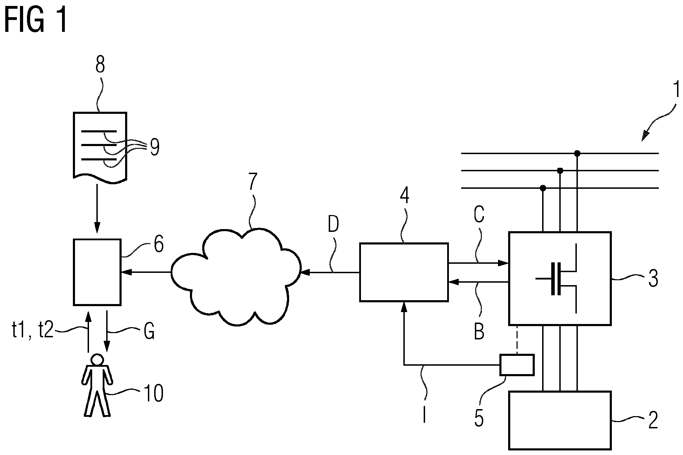

Gemäß FIG 1 wird ein Energiefluss zwischen einem elektrischen Versorgungsnetz 1 und einem elektrischen Aggregat 2 (in der Regel eine elektrische Last, manchmal aber auch eine elektrische Energiequelle wie beispielsweise ein Generator) über einen Leistungsumrichter 3 gesteuert. Der Leistungsumrichter 3 wird zu diesem Zweck mittels einer zugehörigen Steuereinrichtung 4 mit Steuerbefehlen C beaufschlagt.

Die Steuereinrichtung 4 erfasst Betriebsgrößen B des Leistungsumrichters 3, insbesondere die über den verschiedenen Halbleiterschaltern des Leistungsumrichters 3 abfallenden Spannungen und die über die verschiedenen Halbleiterschalter des Leistungsumrichters 3 fließenden Ströme. Weiterhin können der Steuereinrichtung 4 auch andere Betriebsgrößen B des Leistungsumrichters 3 bekannt sein, beispielsweise die Schaltfrequenz, die Pulsweite und der duty cycle der verschiedenen Halbleiterschalter. Auch können der Steuereinrichtung 4 mittels Sensoren 5 Informationen I aus der Umgebung des Leistungsumrichters 3 bekannt werden, beispielsweise die Umgebungstemperatur, die Luftfeuchtigkeit, der Luftdruck und andere mehr.

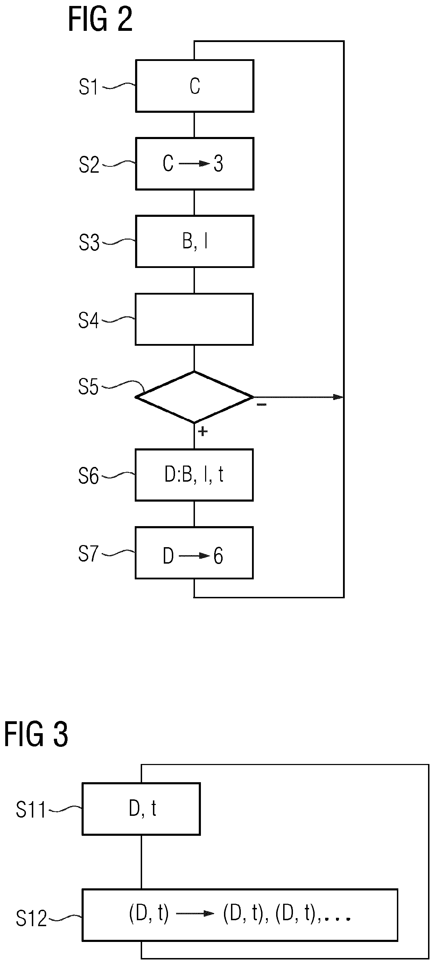

Die Steuereinrichtung 4 führt ein Betriebsverfahren aus, das nachstehend in Verbindung mit FIG 2 erläutert wird. Die Vorgehensweise wird nur kursorisch erläutert, weil sie im Rahmen der vorliegenden Erfindung von untergeordneter Bedeutung ist.

Gemäß FIG 2 bestimmt die Steuereinrichtung 4 in einem Schritt S1 die Steuerbefehle C für den Leistungsumrichter 3 und steuert den Leistungsumrichter 3 in einem Schritt S2 entsprechend der Steuerbefehle C an. Die Ermittlung der Steuerbefehle C und die entsprechende Ansteuerung des Leistungsumrichters 3 sind als solche nicht Gegenstand der vorliegenden Erfindung.

In einem Schritt S3 werden der Steuereinrichtung 4 die Betriebsgrößen B und die Informationen I bekannt. In einem Schritt S4 ordnet die Steuereinrichtung 4 den Betriebsgrößen B und den Informationen I die zugehörige Erfassungszeit zu und speichert sie intern ab.

In einem Schritt S5 prüft die Steuereinrichtung 4, ob sie Daten D an eine Recheneinrichtung 6 übermitteln soll, mit der die Steuereinrichtung 4 über ein offenes Netzwerk 7 (beispielsweise das Internet oder ein LAN) verbunden ist. Wenn dies nicht der Fall ist, geht die Steuereinrichtung 4 direkt zum Schritt S1 zurück. Wenn dies hingegen der Fall ist, nimmt die Steuereinrichtung 4 in einem Schritt S6 eine Aufbereitung der Betriebsgrößen B und Informationen I vor, die sie während eines bestimmten Zeitraums gespeichert hat. In der Regel erstreckt sich der Zeitraum vom Zeitpunkt der letzten Übermittlung von Daten D an die Recheneinrichtung 6 bis zum aktuellen Zeitpunkt. Durch die Aufbereitung der Betriebsgrößen B und Informationen I ermittelt die Steuereinrichtung 4 die Daten D. Die Daten D beschreiben einen jeweiligen Betriebszustand des Leistungsumrichters 3. Im einfachsten Fall ist die Aufbereitung trivial, so dass die Daten D direkt mit den Betriebsgrößen B und Informationen I korrespondieren. Es sind aber auch "echte" Aufbereitungen möglich, insbesondere statistische Auswertungen. In diesem Fall korrespondieren die Daten D mit den statistischen Auswertungen. Beispielsweise kann die Steuereinrichtung 4 den Mittelwert, einen Medianwert, das Minimum, das Maximum, eine Streuung oder Varianz und andere mehr ermitteln. Weiterhin ordnet die Steuereinrichtung 4 den ermittelten Daten D im Schritt S6 einen Bezugszeitpunkt t zu. Diese Kombination, also die durch Auswertung ermittelten Daten D und den Bezugszeitpunkt t übermittelt die Steuereinrichtung 4 in einem Schritt S7 über das Netzwerk 7 an die Recheneinrichtung 6.

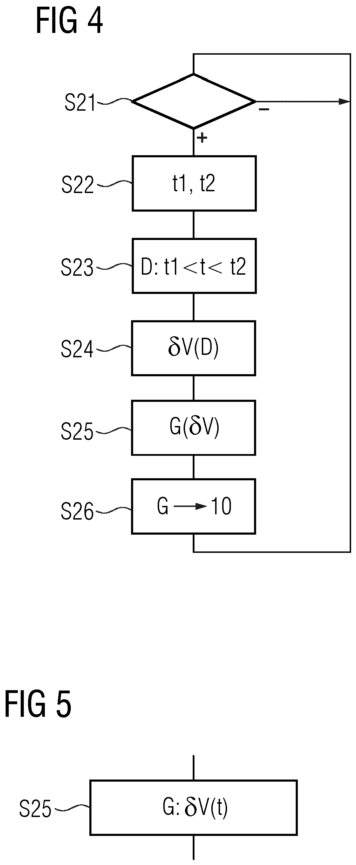

Die Recheneinrichtung 6 ist mit einem Computerprogramm 8 programmiert. Das Computerprogramm 8 umfasst Befehle 9, die von der Recheneinrichtung 6 unmittelbar ausführbar sind. Bei ihrer Ausführung durch die Recheneinrichtung 9 veranlassen die Befehle 9 die Recheneinrichtung 6, ein Betriebsverfahren auszuführen. Ein Teil dieses Betriebsverfahrens wird nachstehend in Verbindung mit FIG 3 näher erläutert, ein weiterer Teil dieses Betriebsverfahrens in Verbindung mit FIG 4. die Vorgehensweisen der FIG 3 und 4 werden parallel ausgeführt.

Gemäß FIG 3 nimmt die Recheneinrichtung 6 in einem Schritt S11 die Daten D und den jeweils zugehörigen Bezugszeitpunkt t entgegen. Die Daten D und der Bezugszeitpunkt t werden von der Steuereinrichtung 4 über das Netzwerk 7 an die Recheneinrichtung 6 übermittelt. In einem Schritt S12 speichert die Recheneinrichtung 6 die im Schritt S11 entgegengenommenen Daten D einschließlich des zugehörigen Bezugszeitpunkts t ab. Die Abspeicherung des Schrittes S12 erfolgt derart, dass gleichartige Daten D und die jeweils zugehörigen Bezugszeitpunkte t, welche die Recheneinrichtung 6 bereits zu früheren Zeitpunkten entgegengenommen und gespeichert hat, nicht überschrieben werden. Die Speicherung des Schrittes S12 erfolgt also zusätzlich zu diesen Daten D und den zugehörigen Bezugszeitpunkten t. Sodann geht die Recheneinrichtung 6 wieder zum Schritt S11 zurück, so dass die Schritte S11 und S12 immer wieder ausgeführt werden. Im Ergebnis baut die Recheneinrichtung 6 somit nach und nach eine Historie des Betriebszustands des Leistungsumrichters 3 auf.

Gemäß FIG 4 prüft die Recheneinrichtung 6 in einem Schritt S21, ob ihr von einer Bedienperson 10 (siehe FIG 1) eine Anforderung für eine Auswertung vorgegeben wird. Wenn dies der Fall ist, führt die Recheneinrichtung 6 Schritte S22 bis S26 aus. Anderenfalls geht die Recheneinrichtung 6 direkt zum Schritt S21 zurück.

Im Schritt S22 nimmt die Recheneinrichtung 6 von der Bedienperson 10 einen Anfangszeitpunkt t1 und einen Endzeitpunkt t2 entgegen. Der Anfangszeitpunkt t1 liegt in der Vergangenheit. Es kann sich prinzipiell um einen beliebigen in der Vergangenheit liegenden Zeitpunkt handeln. Der Endzeitpunkt t2 liegt nach dem Anfangszeitpunkt t1. Auch der Endzeitpunkt t2 kann in der Vergangenheit liegen. Der Endzeitpunkt t2 kann aber auch in der Gegenwart liegen. Beispiele für den durch den Anfangszeitpunkt t1 und den Endzeitpunkt t2 definierten Auswertungszeitraum sind der heutige Tag, der gestrige Tag, die vergangene Woche, der vergangene Monat, das letzte Jahr und die gesamte bisherige Lebensdauer des Leistungsumrichters 3.

Im Schritt S23 selektiert die Recheneinrichtung 6 die gespeicherten Daten D, deren jeweiliger Bezugszeitpunkt t zwischen dem Anfangszeitpunkt t1 und dem Endzeitpunkt t2 liegt. Die Daten D, deren jeweiliger Bezugszeitpunkt t genau dem Anfangszeitpunkt t1 oder genau dem Endzeitpunkt t2 entspricht, können nach Bedarf ebenfalls selektiert werden oder nicht mit selektiert werden. Die Frage, wie diese beiden singulären Fälle behandelt werden, ist von untergeordneter Bedeutung.

Im Schritt S24 ermittelt die Recheneinrichtung 6 für die Bezugszeitpunkte t der selektierten Daten D anhand der Betriebszustände des Leistungsumrichters 3 einen jeweiligen Belastungsgrad δV des Leistungsumrichters 3. Der Belastungsgrad δV steigt vorzugsweise mit dem Ausmaß an, in dem der Leistungsumrichter 3 Verschleiß unterliegt. Insbesondere kann der Belastungsgrad δV proportional zu dem Verschleiß sein. Der Belastungsgrad δV kann normiert sein, beispielsweise auf die erwartete Lebensdauer des Leistungsumrichters 3.

Im Schritt S25 ermittelt die Recheneinrichtung 6 eine Grafik G. Die ermittelte Grafik G basiert auf den im Schritt S24 ermittelten Belastungsgraden δV. Im Schritt S26 gibt die Recheneinrichtung 6 die ermittelte Grafik G an die Bedienperson 10 aus. Sodann kann die Recheneinrichtung 6 beispielsweise wieder zum Schritt S21 zurückgehen.

Nachstehend werden mögliche Arten der Grafik G näher erläutert.

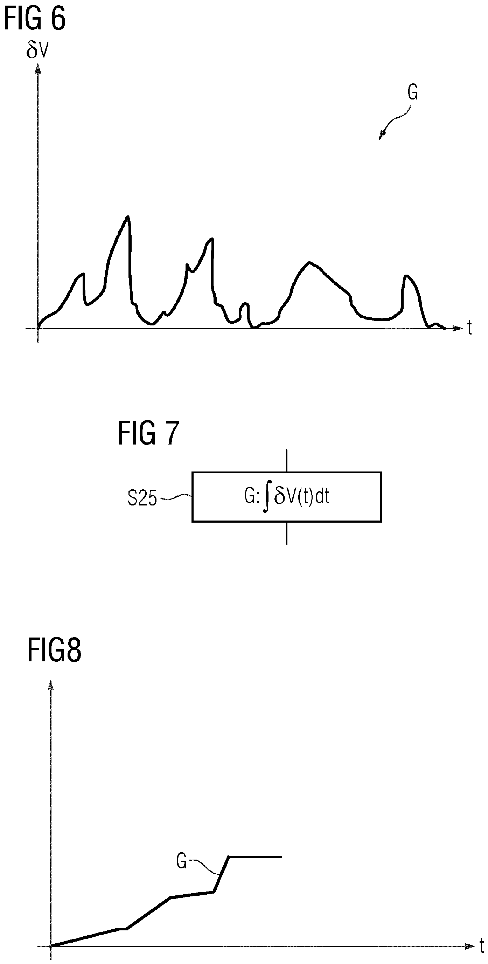

Beispielsweise kann der Schritt S25 so implementiert sein, wie dies nachstehend in Verbindung mit FIG 5 näher erläutert wird. Gemäß FIG 5 ist der Schritt S25 derart ausgestaltet, dass die Recheneinrichtung 6 als Grafik G einen zeitlichen Verlauf des Belastungsgrades δV ermittelt. Durch diese Darstellung ist für die Bedienperson 10 besonders einfach zu erkennen, zu welchen Bezugszeitpunkten t ein besonders hoher Verschleißgrad δV angefallen ist. In manchen Fällen kann durch Analyse des Nutzprozesses, in dessen Rahmen der Leistungsumrichter 3 eingesetzt wird, erkannt werden, worauf dies zurückzuführen ist. Manchmal kann sogar der Nutzprozess modifiziert werden, so dass die besonders hohen Verschleißgrade δV vermieden oder zumindest reduziert werden können. FIG 6 zeigt einen möglichen zeitlichen Verlauf des Belastungsgrades δV.

Alternativ oder zusätzlich kann der Schritt S25 gemäß FIG 7 derart implementiert sein, dass die Recheneinrichtung 6 im Schritt S25 als Grafik G einen zeitlichen Verlauf einer aus dem Belastungsgrad δV abgeleiteten Größe ermittelt. Die abgeleitete Größe kann insbesondere das Integral des Belastungsgrades δV sein. Durch diese Darstellung ist für die Bedienperson 10 besonders einfach zu erkennen, welcher Gesamtverschleiß innerhalb des Auswertungszeitraums insgesamt angefallen ist. FIG 8 zeigt einen möglichen zeitlichen Verlauf der abgeleiteten Größe.

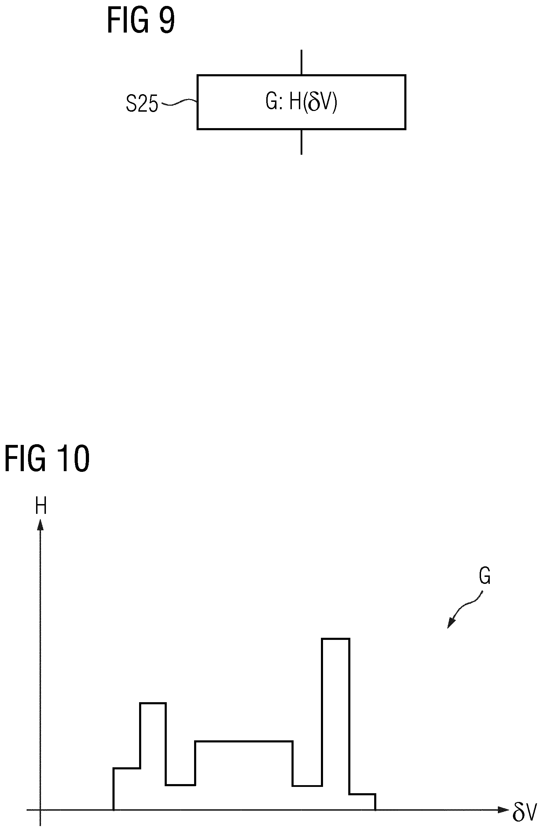

Alternativ oder zusätzlich kann der Schritt S25 gemäß FIG 9 derart implementiert sein, dass die Recheneinrichtung 6 im Schritt S25 als Grafik G eine Häufigkeit H des Belastungsgrades δV ermittelt. Durch diese Darstellung ist für die Bedienperson 10 besonders einfach zu erkennen, mit welcher Häufigkeit H innerhalb des Auswertungszeitraums bestimmte Belastungsgrade δV angefallen sind. FIG 10 zeigt eine mögliche Häufigkeitsverteilung.

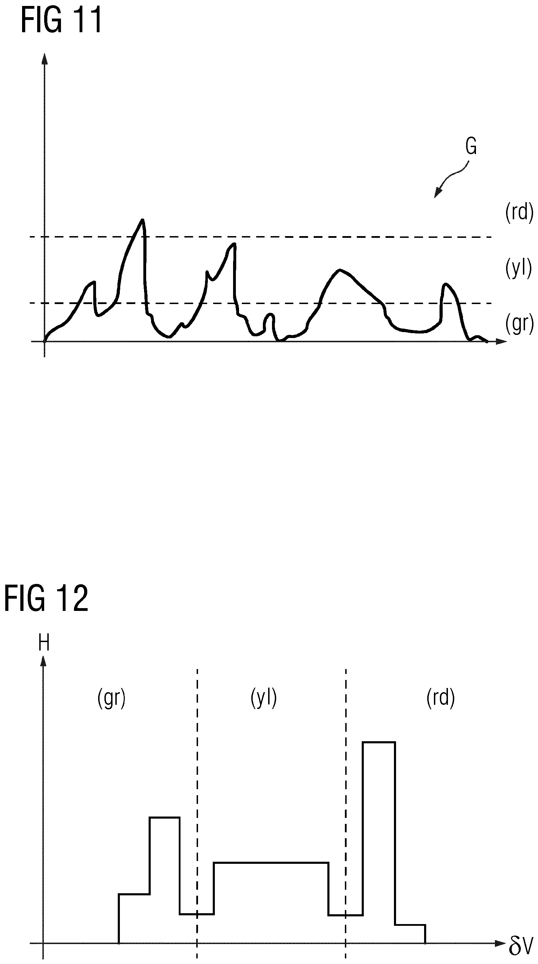

Vorzugsweise markiert die Recheneinrichtung 6 Bereiche der ausgegebenen Grafik G in Abhängigkeit von dem Belastungsgrad δV farblich. Dies ist nachstehend in den FIG 11 und 12 dargestellt. Die FIG 11 und 12 sind Modifikationen der FIG 6 und 10. Im Unterschied zu den FIG 6 und 10 sind in den FIG 11 und 12 jedoch Bereiche vorhanden, die in unterschiedlichen Farben dargestellt werden. Beispielsweise können die Kürzel "gr", "yl" und "rd" für grün (englisch: green), gelb (englisch: yellow) und rot (englisch: red) stehen.

Zusätzlich zu der Grafik G können weitere Werte ausgegeben werden, beispielsweise der innerhalb des Auswertungszeitraums aufgetretene maximale Belastungsgrad δV, eine maximale Sperrschichttemperatur der Halbleiterschalter und andere mehr.

Die vorliegende Erfindung weist viele Vorteile auf. Insbesondere wird weder nur der aktuelle Zustand betrachtet noch eine Integration des aufgelaufenen Verschleißes für sich, sondern es werden vielmehr Analysen zeitlicher Verläufe und von Häufigkeiten möglich. Der Bedienperson 10 wird somit ermöglicht, tiefergehende Analysen vorzunehmen, die das Potenzial für spätere Optimierungen bieten. Auch können die Auswertungen mit anderweitig zur Verfügung stehenden Ergebnissen verknüpft werden. Die Recheneinrichtung 6 kann eine eigenständige, lokal bei der Bedienperson 10 vorhandene Recheneinrichtung sein. Es kann sich aber auch um einen Bestandteil einer sogenannten Cloud handeln. Gleiches gilt für den Speicher, in dem die Historie gespeichert wird.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Recheneinrichtung (6),
- wobei die Recheneinrichtung (6) von einer Steuereinrichtung (4) eines Leistungsumrichters (3) über ein offenes Netzwerk (7) immer wieder jeweilige aktuelle Daten (D) entgegennimmt, die einen jeweiligen Betriebszustand des Leistungsumrichters (3) und einen Bezugszeitpunkt (t) für den jeweiligen Betriebszustand beschreiben,
- wobei die Recheneinrichtung (6) die jeweils entgegengenommenen Daten (D) zusätzlich zu bereits gespeicherten Daten (D) speichert, die jeweils einen jeweiligen Betriebszustand des Leistungsumrichters (3) und den jeweiligen Bezugszeitpunkt (t) für den jeweiligen Betriebszustand beschreiben, so dass die Recheneinrichtung (6) nach und nach eine Historie des Betriebszustands des Leistungsumrichters (3) aufbaut,
- wobei die Recheneinrichtung (6) von einer Bedienperson (10) einen Anfangszeitpunkt (t1) und einen Endzeitpunkt (t2) entgegennimmt, wobei der Anfangszeitpunkt (t1) in der Vergangenheit liegt und der Endzeitpunkt (t2) nach dem Anfangszeitpunkt (t1) liegt,
- wobei die Recheneinrichtung (6) die gespeicherten Daten (D) selektiert, deren jeweiliger Bezugszeitpunkt (t) zwischen dem Anfangszeitpunkt (t1) und dem Endzeitpunkt (t2) liegt, und
- wobei die Recheneinrichtung (6) für die Bezugszeitpunkte (t) der selektierten Daten (D) anhand der Betriebszustände des Leistungsumrichters (3) der selektierten Daten (D) einen jeweiligen Belastungsgrad (δV) des Leistungsumrichters (3) ermittelt und einen zeitlichen Verlauf des Belastungsgrades (δV) und/oder einer aus dem Belastungsgrad (δV) abgeleiteten Größe, insbesondere des Integrals des Belastungsgrades (δV), und/oder eine Häufigkeit (H) des Belastungsgrades (δV) als Funktion des Belastungsgrades (δV) als Grafik (G) an die Bedienperson (10) ausgibt.

2. Betriebsverfahren nach Anspruch 1,
**dadurch gekennzeichnet,**
**dass** der Belastungsgrad (δV) mit dem Ausmaß, in dem der Leistungsumrichter (3) Verschleiß unterliegt, ansteigt, insbesondere proportional zu dem Verschleiß ist.

3. Betriebsverfahren nach Anspruch 1 oder 2,
**dadurch gekennzeichnet,**
**dass** die Recheneinrichtung (6) Bereiche der ausgegebenen Grafik (G) in Abhängigkeit von dem Belastungsgrad (δV) farblich markiert.

4. Computerprogramm, wobei das Computerprogramm Befehle (9) umfasst, die bei ihrer Ausführung durch eine Recheneinrichtung (6) die Recheneinrichtung (6) veranlassen, ein Betriebsverfahren nach einem der Ansprüche 1 bis 3 auszuführen.

5. Recheneinrichtung, wobei die Recheneinrichtung mit einem Computerprogramm (8) nach Anspruch 4 programmiert ist, so dass die Recheneinrichtung im Betrieb ein Betriebsverfahren nach einem der Ansprüche 1 bis 3 ausführt.
